# EUROPEAN PATENT APPLICATION

(11) **EP 1 681 897 A1**
(43) Date of publication of application: **19.07.2006**
(21) Application number: 05011946.0
(22) Date of filing: 02.06.2005
(51) Int. Cl.: H04Q 11/00, G02B 6/35

(54) **Optical path switch apparatus for an optical lan system**

(30) Priority: 14.01.2005 JP 2005007758
(71) Applicant: Pacific Industrial Co., Ltd., Ogaki-shi, Gifu-ken 503-8603 (JP)
(72) Inventor: Kawase, Shinichi, Ogaki-shi, Gifu-ken 503-8603 (JP); Okubo, Youichi, Ogaki-shi, Gifu-ken 503-8603 (JP); Katou, Michiya, Ogaki-shi, Gifu-ken 503-8603 (JP)
(74) Representative: Geyer, Fehners & Partner

(57) **Abstract**

In an optical LAN system, an optical connector is provided between the input and output optical fiber cables and each of the node devices. The optical connector includes a movable body (a switch body) having a prism. The movable body is switched selectively between a first position (a first state) at which the input and output optical fiber cables are optically connected to the node device and a second position (a second state) in which the input optical fiber cable and the output optical fiber cable are optically connected to each other in such a manner as to bypass the node device. This arrangement suppresses a network crash by means of a relatively simple configuration.

## Description

### BACKGROUND OF THE INVENTION

The present invention relates to optical path switch apparatuses used in optical LAN systems, and more particularly, to techniques for suppressing network crashes caused by problems of node devices.

A general ring type optical LAN system includes a plurality of node devices that are connected together by optical fiber cables for defining a network. An optical signal is circulated through the node devices by means of the optical fiber cables. Thus, if any one of the node devices fails, the optical signal cannot be passed to a node device subsequent to the failed node device, which results in a network crash.

Japanese Laid-Open Patent Publication No. 2003-273810 discloses a technique of suppressing a network crash when any one of the node devices fails. More specifically, according to the technique, each node device is connected to an input optical fiber cable and an output optical fiber cable by an optical connector functioning as an optical path switch apparatus. The optical connector includes a first network terminal connected to the input optical fiber cable and a second network terminal connected to the output optical fiber cable. The optical connector also includes a first node terminal and a second node terminal that are connected to the node device. Further, the optical connector has a first optical switch and a second optical switch. The first optical switch selectively connects or disconnects the network terminals with respect to each other. The second optical switch selectively connects or disconnects each of the node terminals with respect to the corresponding one of the network terminals.

If the node device functions normally, the first optical switch becomes open so that the network terminals are disconnected from each other and the second optical switch is closed so that each node terminal is connected to the corresponding network terminal. In this state, the input optical fiber cable is connected to the node device through the first network terminal, the second optical switch, and the first node terminal. Further, the output optical fiber cable is connected to the node device through the second network terminal, the second optical switch, and the second node terminal. As a result, the node device is held in a state allowed to receive an optical signal from the input optical fiber cable and sending the optical signal to the output optical fiber cable.

If the node device fails, the first optical switch is closed so that the network terminals are connected to each other and the second optical switch becomes open so that the node terminals are disconnected from the corresponding network terminals. In this state, the input optical fiber cable is connected to the output optical fiber cable through the first network terminal, the first optical switch, and the second network terminal. Further, the failed node device is disconnected from the input and output optical fiber cables. Accordingly, the optical signal is sent from the input optical fiber cable to the output optical fiber cable in such a manner as to bypass the failed node device. In this manner, a network crash caused by the failure of the node device is prevented.

As described in the aforementioned document, the optical connector has the first optical switch selectively connecting or disconnecting the input and output optical fiber cables with respect to each other and the second optical switch selectively connecting or disconnecting the input and output optical fiber cables with respect to the node device. That is, the optical connector must have at least two optical switches for switching the optical path, or the first and second optical switches. The switches are controlled independently from each other. This complicates the configuration of the optical connector and increases the cost.

### SUMMARY OF THE INVENTION

Accordingly, it is an objective of the present invention to provide an optical path switch apparatus of an optical LAN system that is capable of suppressing a network crash by means of a relatively simple configuration.

To achieve the foregoing and other objectives and in accordance with the purpose of the present invention, an optical path switch apparatus for an optical LAN system is provided. The apparatus is provided between input and output optical fiber cables and a node device. The apparatus includes a switch body including an optical member. The switch body is switched selectively between a first state in which the input and output optical fiber cables are optically connected to the node device, and a second state in which the input optical fiber cable and the output optical fiber cable are optically connected to each other in such a manner as to bypass the node device.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic view showing an optical LAN system according to a first embodiment of the present invention;
Fig. 2(a) is a side view schematically showing an optical connector provided in each of the node devices of Fig. 1, as maintained in a state in which a movable body is located at a first position;
Fig. 2(b) is a schematic plan view corresponding to Fig. 2 (a) ;
Fig. 3(a) is a side view schematically showing the optical connector, as held in a state in which the movable body is located at a second position;
Fig. 3(b) is a schematic plan view corresponding to Fig. 3 (a) ;
Fig. 4(a) is a side view schematically showing an optical connector of a modification of the first embodiment, as held in a state in which a movable body is located at a first position;
Fig. 4(b) is a side view schematically showing the optical connector of Fig. 4(a), as held in a state in which the movable body is located at a second position;
Fig. 5 is a plan view schematically showing a modification of the first embodiment;
Fig. 6(a) is a plan view schematically showing an optical connector according to a second embodiment of the present invention, as held in a state in which a movable body is located at a first position;
Fig. 6(b) is a plan view schematically showing the optical connector of Fig. 6(a), as held in a state in which the movable body is located at a second position;
Fig. 7 is a plan view schematically showing a modification of the second embodiment; and
Fig. 8 is a plan view schematically showing a third embodiment of the present invention.

### DETAILED DESCRIPTION OF THE PREFERRED EMBODIMENTS

A first embodiment of the present invention will now be described with reference to the attached drawings.

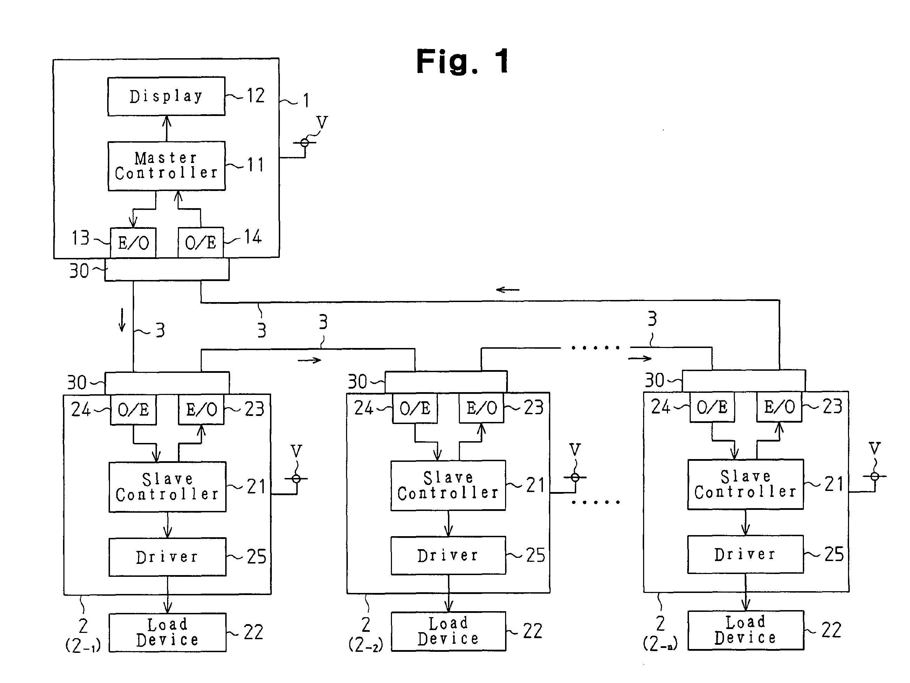

Fig. 1 shows an optical LAN system according to the first embodiment, or a ring type optical LAN system, which is suitable for the use in vehicles. The system includes a plurality of node devices 1, 2. The node devices 1, 2 include a master node 1 and a plurality of slave nodes 2 (first to nth slave nodes 2-1 to 2-n). The master node 1 and the slave nodes 2 are connected together by optical fiber cables 3 for defining a ring type network.

The master node 1 is installed in, for example, an instrument panel of a vehicle (not shown). The master node 1 includes a controller (a master controller) 11, which is formed by a microcomputer or the like. The master controller 11 has, for example, a central processing unit (CPU), a read only memory (ROM), and a random access memory (RAM). A display 12 serving as an annunciator is connected to the master controller 11. The display 12 is arranged on the instrument panel in an exposed manner such that the display 12 is visible from the driver of the vehicle. The master controller 11 operates the display 12 to indicate the condition of each of the slave nodes 2 using characters or codes, when necessary. The display 12 may be replaced by indicator lamps provided in the number corresponding to the number of the slave nodes 2. In this case, the master controller 11 illuminates or flashes any one of the indicator lamps for informing the driver of the condition of the corresponding slave node 2.

An E/O converter (an electrical-to-optical converter) 13 functioning as a light producing member and an O/E converter (an optical-to-electrical converter) 14 functioning as a light receiving member are each connected to the master controller 11 through corresponding wires. The E/O converter 13 receives an electrical signal from the master controller 11 through the corresponding wire and converts the electric signal to an optical signal. The optical signal is then sent to the output optical fiber cable 3 connected to the E/O converter 13. The O/E converter 14 receives an optical signal from the corresponding input optical fiber cable 3, which is connected to the O/E converter 14, and converts the optical signal to an electrical signal. The electrical signal is then sent to the master controller 11 through the corresponding wire.

The slave nodes 2 are installed in various portions of the vehicle. Each of the slave nodes 2 includes a load device 22, which is an electrical component. The load device 22 is formed by an electric actuator such as a motor or a lamp. In response to an instruction of the master node 1, each slave node 2 actuates the associated load device 22. A unique address is given in advance to each of the slave nodes 2.

Each slave node 2 includes a controller (a slave controller) 21, which is formed by a microcomputer or the like. The slave controller 21 has, for example, a central processing unit (CPU), a read only memory (ROM), and a random access memory (RAM). An E/O converter (an electrical-to-optical converter) 23 functioning as a light producing member and an O/E converter (an optical-to-electrical converter) 24 functioning as a light receiving member are each connected to each slave controller 21 through corresponding wires. The E/O converter 23 receives the electrical signal from the associated slave controller 21 through the corresponding wire and converts the electric signal to an optical signal. The optical signal is then sent to the corresponding output optical fiber cable 3, which is connected to the E/O converter 23. The O/E converter 24 receives an optical signal from the corresponding input optical fiber cable 3, which is connected to the O/E converter 24, and converts the optical signal to an electrical signal. The electrical signal is then sent to the associated slave controller 21 through the corresponding wire.

Each of the load devices 22 is connected to the associated slave controller 21 by means of a driver (a driver circuit) 25. Each slave controller 21 controls the corresponding driver 25 for actuating the associated load device 22.

Each of the node devices 1, 2 is connected to a power source V and driven by the power from the power source V. Each node device 1, 2 is optically connected to the corresponding input and output optical fiber cables 3 through an optical connector 30. The optical connector 30 switches an optical path between the input or output optical fiber cable 3 and the associated node device 1, 2. The optical connectors 30 will be later explained in detail.

The optical LAN system employs a token passing method as the system's access control method. More specifically, the master node 1 sends out a token signal to the network, or the optical transmission line defined by the optical fiber cables 3, as an instruction signal. The token signal includes address information of the slave node 2 to which the signal is sent and various instruction information. After being sent from the master node 1 to the optical transmission line, the instruction signal is first received by the first slave node 2-1. If the address included in the signal corresponds to the address of the first slave node 2-1, the first slave node 2-1 operates in accordance with the instruction information of the signal. Further, the first slave node 2-1 adds necessary return information to the instruction signal and sends the signal to the network as a return signal to the master node 1. In contrast, if the address of the instruction signal does not correspond to the address of the first slave node 2-1, the slave node 2-1 simply passes the signal to the network.

After being sent from the first slave node 2-1 to the network, the token signal (the return signal or the instruction signal) is received by the second slave node 2-2. In accordance with the token signal, the second slave node 2-2 operates in the same manner as the first slave node 2-1, as has been described. The token signal is then sent to the subsequent slave node 2. In this manner, the token signal sent out by the master node 1 as the instruction signal is passed from the first slave node 2-1 to the nth slave node 2-n successively. The token signal is then sent out from the final, nth slave node 2-n to the network and received by the master node 1 as the return signal. Depending on the return information included in the return signal from the network, the master node 1 determines the condition of the slave node 2 corresponding to the return signal.

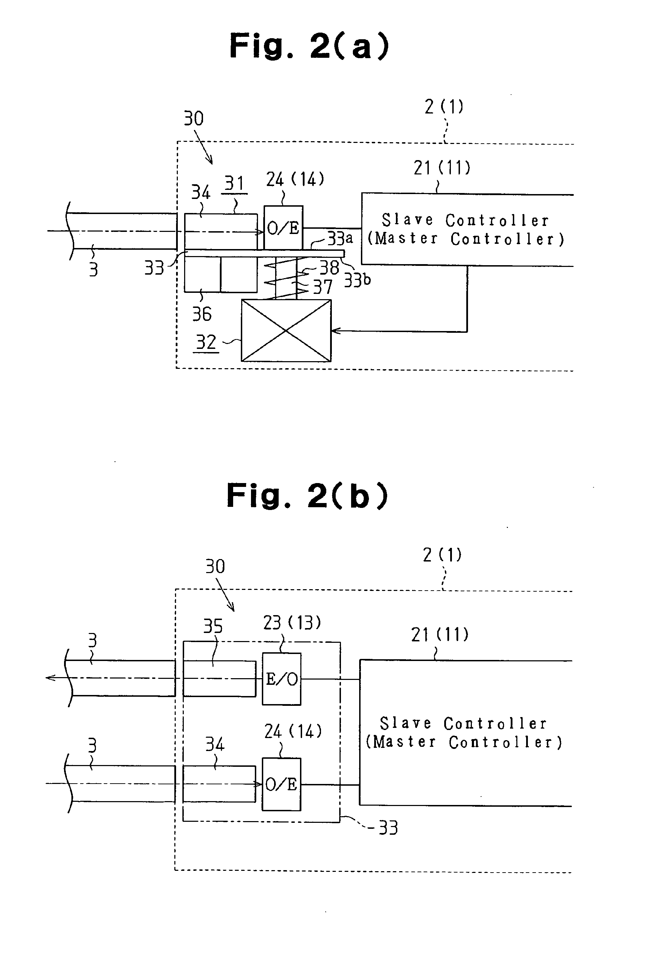

Next, with reference to Figs. 2(a) to 3(b), the optical connectors 30 will be explained in detail. Although Figs. 2(a) to 3(b) each show the optical connector 30 of the slave nodes 2, the optical connector 30 of the master node 1 is configured identical to that of the slave nodes 2.

As shown in Figs. 2(a) to 3(b), the corresponding input and output optical fiber cables 3 are connected to each of the optical connectors 30. Each optical connector 30 includes a movable body 31 functioning as a switch body and an electromagnetic actuator 32 for moving the movable body 31. The movable body 31 includes a support base plate 33, an optical input line 34, an optical output line 35, and a prism 36 serving as an optical member. In the first embodiment, the movable body 31 further includes the corresponding O/E converter 24 (14) and E/O converter 23 (13).

The support base plate 33 has a first surface 33a and a second surface 33b opposed to the first surface 33a. The optical input line 34 and the optical output line 34 are formed of light transmitting material and arranged on the first surface 33a of the support base plate 33. The O/E converter 24 (14) and the E/O converter 23 (13) are also disposed on the first surface 33a. The O/E converter 24 (14) is arranged on the line extending from the optical input line 34, while the E/O converter 23 (13) is arranged on the line extending from the optical output line 35. The prism 36, which functions as a light refracting member, is arranged on the second surface 33b of the support base plate 33 at a position corresponding to the optical input line 34 and the optical output line 35.

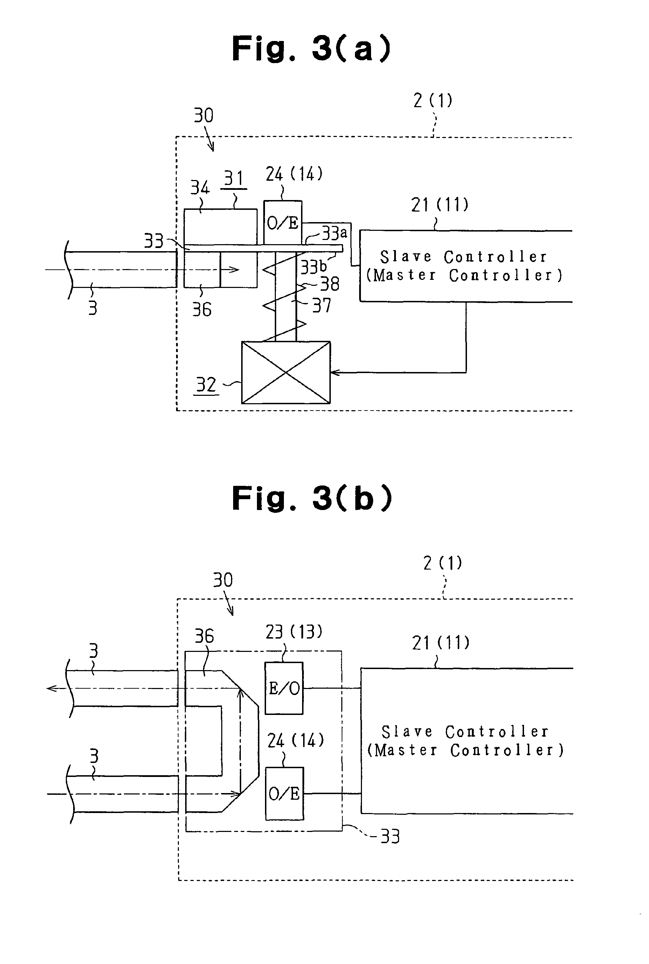

The electromagnetic actuator 32 switches the movable body 31 selectively between a first state shown in Fig. 2(a) and a second state shown in Fig. 3(a). In other words, the electromagnetic actuator 32 moves the movable body 31 between a first position of Fig. 2(a) and a second position of Fig. 3(a). The electromagnetic actuator 32 includes a plunger 37 connected to the movable body 31 and a spring 38. When receiving a drive signal supplied from the associated slave controller 21 (the master controller 11), the plunger 37 is retracted against the urging force of the spring 38, as shown in Fig. 2(a). The movable body 31 is thus moved to the first position. When the supply of the instruction signal to the electromagnetic actuator 32 is suspended, the plunger 37 is projected by the urging force of the spring 38, as shown in Fig. 3(a). The movable body 31 is thus moved to the second position.

With reference to Figs. 2(a) and 2(b), when the movable body 31 is held at the first position, the prism 36 is held at a retreat position separated from the position corresponding to the input and output optical fiber cables 3. Further, the optical input line 34 is arranged on the line extending from the input optical fiber cable 3 and the optical output line 35 is arranged on the line extending from the output optical fiber cable 3. This arrangement allows an optical signal to travel from the input optical fiber cable 3 through the optical input line 34 and to be received by the O/E converter 24 (14). Also, the arrangement allows an optical signal to travel from the E/O converter 23 (13) through the optical output line 35 and to be sent out to the output optical fiber cable 3. That is, the node device 2 (1) is optically connected to the associated input and output optical fiber cables 3.

As shown in Figs. 3(a) and 3(b), when the movable body 31 is held at the second position, the optical input line 34 and the optical output line 35 are held at positions separated from the lines extending from the associated optical fiber cables 3. In other words, the node device 2 (1) is optically disconnected from the associated input and output optical fiber cables 3. Instead, the prism 36 is arranged on the lines extending from the associated input and output optical fiber cables 3. In other words, the prism 36 is deployed at an operational position corresponding to the input and output optical fiber cables 3. The prism 36 is configured such that the end surface of the prism 36 faced to the input optical fiber cable 3 functions as an optical input portion and the end surface of the prism 36 faced to the output optical fiber cable 3 functions as an optical output portion. An optical signal is thus sent from the input optical fiber cable 3 to the prism 36. The optical signal is then refracted in the prism 36 and sent from the prism 36 to the output optical fiber cable 3. That is, the input and output optical fiber cables 3 are optically connected to each other through the prism 36. When the movable body 31 is held at the second position, the prism 36 forms a bypass optical path that bypasses the associated node device 2 (1).

If each of the node devices 1, 2 functions normally, the corresponding controller 11, 21 supplies a drive signal to the electromagnetic actuator 32 of the associated optical connector 30. The movable body 31 is thus moved to the first position shown in Figs. 2(a) and 2(b), so that the node device 1, 2 is optically connected to the corresponding input and output optical fiber cables 3. A network is thus formed by the node devices 1, 2 that are connected together in a ring-like manner, permitting a normal optical communication through the node devices 1, 2.

In contrast, if any one of the node devices 1, 2 fails, the controller 11, 21 of the failed node device 1, 2 suspends the drive signal supply to the electromagnetic actuator 32 of the associated optical connector 30. For example, if the O/E converter 14, 24 or the E/O converter 13, 23 or any other communication component of any node device 1, 2 fails, the associated controller 11, 21 stops the supply of the drive signal to the electromagnetic actuator 32. Further, if the power supply from the power source V to the node device 1, 2 is suspended due to, for example, wire disconnection, both the communication and the signal supply to the associated electromagnetic actuator 32 are disrupted.

When the drive signal supply to the electromagnetic actuator 32 is stopped, the movable body 31 is switched to the second position of Figs. 3(a) and 3(b). In this manner, the failed node device 1, 2 is optically disconnected from the associated input and output optical fiber cables 3. In turn, the input and output optical fiber cables 3 are optically connected to each other through the prism 36. Accordingly, the failed node device 1, 2 is disconnected from the network such that a network is formed exclusively by the normally functioning node devices 1, 2, thus suppressing a network crash.

If any one of the slave nodes 2 fails, the master node 1 is allowed to acquire the failure of the slave node 2 when the slave node 2 does not respond to the instruction signal of the master node 1.

The first embodiment has the following advantages.
(1) The single movable body (switch body) 31 including the prism (the optical member) 36 is switched selectively between the first position (the first state) and the second position (the second state). When the movable body 31 is held at the first position, the input and output optical fiber cables 3 are optically connected to the associated node device 1, 2. When the movable body 31 is held at the second position, the input and output optical fiber cables 3 are optically connected to each other in such a manner as to bypass the node device 1, 2. Thus, unlike the conventional technique, it is unnecessary to provide a switch for switching the communication between the input and output optical fiber cables and the node device separately from a switch for switching the communication between the input optical fiver cable and the output optical fiber cable. Thus, a network crash is suppressed by means of a relatively simple configuration.
(2) The movable body 31 is moved between the first position and the second position by the electromagnetic actuator 32. When receiving a drive signal supplied from the associated controller 11, 21, the electromagnetic actuator 32 moves the movable body 31 to the first position. When such signal supply is suspended, the electromagnetic actuator 32 moves the movable body 31 to the second position. If the power supply from the power source V to the node device 1, 2 is not normally conducted due to wire disconnection or the like, the drive signal supply to the electromagnetic actuator 32 is suspended. The movable body 31 is thus moved to the second position. Accordingly, if any one of the node devices 1, 2 fails due to suspension of the power supply from the power source V, the failed node device 1, 2 is reliably disconnected from the network.

The first embodiment may be modified as follows.

Each of the controllers 11, 21 may be arranged on the corresponding support base plate 33.

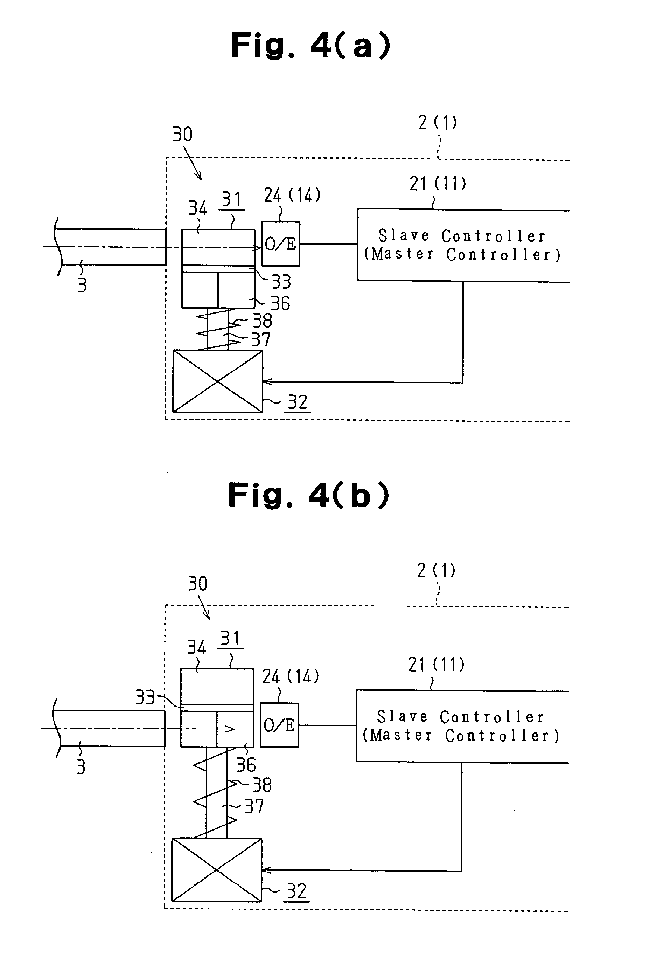

With reference to Figs. 4(a) and 4(b), instead of arranging the O/E converter 24 (14) and the E/O converter 23 (13) on the support base plate 33, the O/E and E/O converters 24 (14), 23 (13) may be provided in an immovable manner.

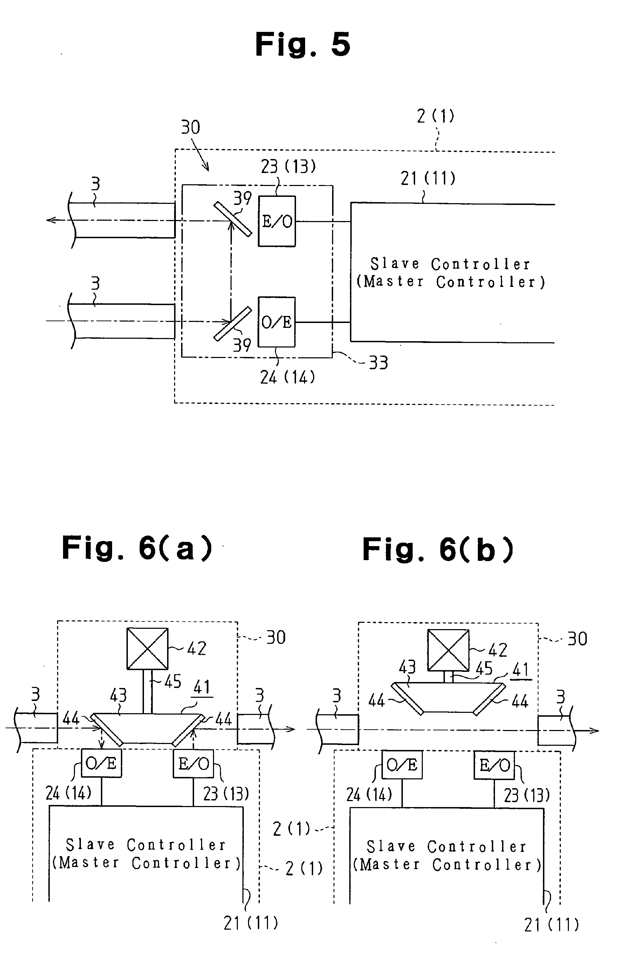

As shown in Fig. 5, a pair of mirrors 39 may be employed as optical members, instead of the prism 36.

Instead of moving the optical input line 34, the optical output line 35, and the optical member 36 (the optical members 39), an end of the input optical fiber cable 3 and an end of the output optical fiber cable 3 may be moved. In this case, these ends are supported by a single movable member connected to the plunger 37 of the electromagnetic actuator 32. The electromagnetic actuator 32 moves the movable member between a position facing the optical input line 34 and the optical output line 35 and a position facing the optical member 36 (the optical members 39). This configuration also has the same operational effects as those of the first embodiment.

The optical input line 34 and the optical output line 35 may be omitted. In this case, when the movable body 31 is located at the first position, the optical signal is sent from the input optical fiber cable 3 directly to the O/E converter 14, 24. Further, the optical signal is sent from the E/O converter 13, 23 directly to the output optical fiber cable 3.

As an actuator for moving the movable body 31, a piezoelectric actuator may be employed instead of the electromagnetic actuator 32.

A second embodiment of the present invention will hereafter be described. The description focuses on the difference between the first embodiment and the second embodiment.

As shown in Figs, 6(a) and 6(b), the input optical fiber cable 3 and the output optical fiber cable 3 are connected to the associated optical connector 30 such that the input and output optical fiber cables 3 are arranged coaxially. The optical connector 30 includes a movable body 41 functioning as a switch body and an electromagnetic actuator 42 for moving the movable body 41. The movable body 41 includes a support member 43 and a pair of mirrors 44 each serving as an optical member. The mirrors 44 are secured to the support member 43.

The electromagnetic actuator 42 has a plunger 45 connected to the movable body 41. When the electromagnetic actuator 42 receives a drive signal from the associated controller 21 (11), the plunger 45 is projected as shown in Fig. 6(a). The movable body 41 is thus moved to a first position. When the signal supply to the electromagnetic actuator 42 is suspended, the plunger 45 is retracted as shown in Fig. 6(b), thus moving the movable body 41 to a second position.

When the movable body 41 is held at the first position, the mirrors 44 are located at operational positions corresponding to the input and output optical fiber cables 3 as shown in Fig. 6(a). In this state, one of the mirrors 44 refracts an optical signal such that the optical signal is sent from the input optical fiber cable 3 to the O/E converter 24 (14). The other one of the mirrors 44 refracts the optical signal such that the optical signal is sent from the E/O converter 23 (13) to the output optical fiber cable 3.

In contrast, if the movable body 41 is held at the second position, the mirrors 44 are located at retreat positions separated from the operational positions, as shown in Fig. 6(b). In this state, the optical signal is guided to the output optical fiber cable 3 from the input optical fiber cable 3 without being received by the mirrors 44.

As has been explained, in the second embodiment, when any one of the node devices 1, 2 fails and the associated movable body 41 is switched to the second position, the optical signal is supplied from the input optical fiber cable 3 to the output optical fiber cable 3 without being received by the mirrors 44. Generally, when an optical signal is reflected or refracted by an optical member, the quantity of light of the signal is decreased. However, in the second embodiment, the optical signal is guided to a subsequent node device 1, 2 without being reflected or refracted by the optical members, when any one of the node devices 1, 2 fails. In this manner, while attenuation of the optical signal is suppressed, the reliability of the optical communication is improved.

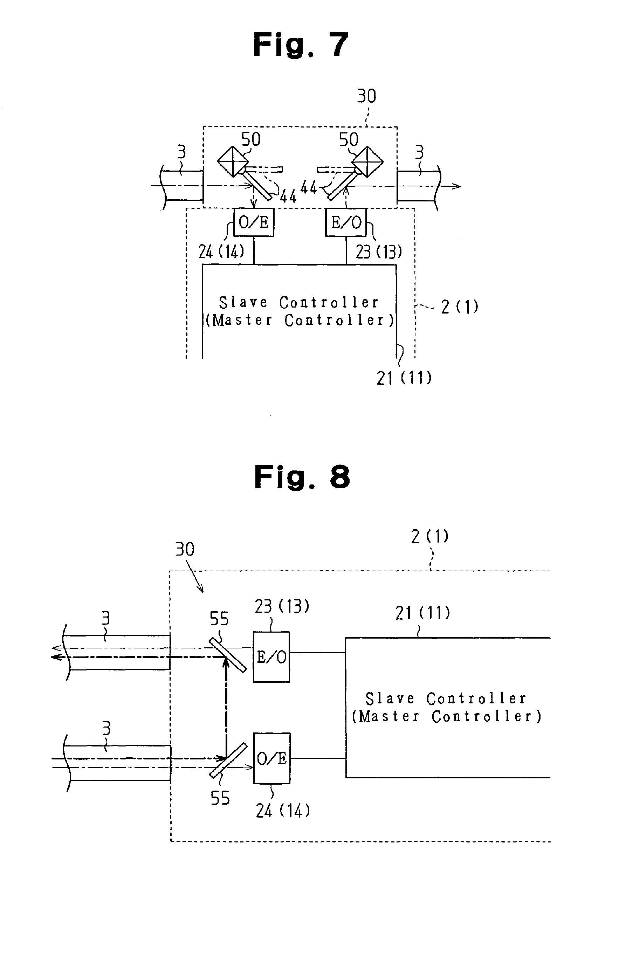

The second embodiment may be modified to the form shown in Fig. 7. In this modification, each of the mirrors 44 is allowed to pivot between the operational position indicated by the solid lines and the retreat position indicated by the broken lines. Each mirror 44 is pivoted by an actuator 50 driven by a drive signal from the associated controller 21 (11). The mirrors 44 together form a single switch body (a single movable body). The modification also has the same operational effects as those of the first embodiment of Fig. 6.

A third embodiment of the present invention will hereafter be described. The description focuses on the difference between the first embodiment and the third embodiment.

In the third embodiment, each of the optical connectors 30 includes a pair of optical members 55, as shown in Fig. 8. Each of the optical members 55 is constructed to be switched between an optical signal transmitting state and an optical signal reflecting state. The optical members 55 together form a single switch member. Each of the optical members 55 is immovable and located at a position corresponding to the input or output optical fiber cable 3. Each optical member 55 is formed of, for example, liquid crystal material. When a voltage is applied to the optical member 55, the light is transmitted through the optical member 55. When a voltage is not applied, the light is reflected by the optical member 55.

When receiving a drive signal from the associated controller 21 (11), the optical members 55 are switched to a first state. In the first state, one of the optical members 55 transmits an optical signal for sending the optical signal from the input optical fiber cable 3 to the O/E converter 24 (14). Meanwhile, the other optical member 55 transmits the optical signal for sending the optical signal from the E/O converter 23 (13) to the output optical fiber cable 3. When the supply of the drive signal to the optical members 55 is stopped, the optical members 55 are switched to a second state. In the second state, the optical members 55 reflect and refract the optical signal such that the optical signal is guided from the input optical fiber cable 3 to the output optical fiber cable 3.

The third embodiment thus has the same operational effects as those of the first embodiment. In addition to that, since the third embodiment does not include a movable member that is moved for switching an optical path, the third embodiment has a further simplified structure.

The optical LAN system of the present invention may be used for different purposes other than the use in vehicles. The optical LAN system of the present invention may be applied to different types of optical LAN systems such as a bus type, other than the ring type.

The present examples and embodiments are to be considered as illustrative and not restrictive and the invention is not to be limited to the details given herein, but may be modified within the scope and equivalence of the appended claims.

## Claims

1. An optical path switch apparatus for an optical LAN system, the apparatus being provided between input and output optical fiber cables and a node device, the apparatus
**characterized by**:
a switch body including an optical member, wherein the switch body is switched selectively between a first state in which the input and output optical fiber cables are optically connected to the node device, and a second state in which the input optical fiber cable and the output optical fiber cable are optically connected to each other in such a manner as to bypass the node device.

2. The apparatus according to Claim 1, **characterized in that** the optical member functions to refract an optical signal when the switch body is switched to either the first state or the second state.

3. The apparatus according to Claim 2, **characterized in that**, when the switch body is switched to the first state, the optical signal is permitted to travel from the input optical fiber cable to the node device and then from the node device to the output optical fiber cable without passing through the optical member, and, when the switch body is switched to the second state, the optical member refracts the optical signal for sending the optical signal from the input optical fiber cable to the output optical fiber cable.

4. The apparatus according to Claim 2, **characterized in that**, when the switch body is switched to the first state, the optical member refracts the optical signal for sending the optical signal from the input optical fiber cable to the node device and then from the node device to the output optical fiber cable, and, when the switch body is switched to the second state, the optical signal is permitted to travel from the input optical fiber cable to the output optical fiber cable without passing through the optical member.

5. The apparatus according to any one of claims 1 to 4, **characterized in that** the switch body includes a movable body, and wherein the movable body is movable between a first position corresponding to the first state and a second position corresponding to the second state.

6. The apparatus according to Claim 5, **characterized by** an actuator for moving the movable body between the first position and the second position, wherein the actuator moves the movable body to the first position when receiving an external drive signal, and to the second position when a supply of the drive signal is stopped.

7. The apparatus according to Claim 6, **characterized in that** the actuator is formed by either an electromagnetic actuator or a piezoelectric actuator.

8. The apparatus according to any one of claims 5 to 7, **characterized in that**, when the movable body is held at one of the first and second positions, the optical member is located at an operational position corresponding to the input and output optical fiber cables, and when the movable body is held at the other one of the first and second positions, the optical member is located at a retreat position separated from the operational position.

9. The apparatus according to any one of claims 1 to 8, **characterized in that** the optical member is formed by a prism or a mirror.

10. The apparatus according to Claim 2, **characterized in that** the optical member is constructed to be switched between an optical signal transmitting state and an optical signal reflecting state, wherein, when the switch body is switched to the first state, the optical member transmits the optical signal such that the optical signal is passed from the input optical fiber cable to the node device and then from the node device to the output optical fiber cable, and wherein, when the switch body is switched to the second state, the optical member reflects and refracts the optical signal for sending the optical signal from the input optical fiber cable to the output optical fiber cable.

11. The apparatus according to Claim 10, **characterized in that** the switch body is switched to the first state when receiving an external drive signal and to the second state when a supply of the drive signal is stopped.
